# EUROPÄISCHE PATENTSCHRIFT

(11) **EP 1 238 826 B1**
(45) Veröffentlichungstag und Bekanntmachung des Hinweises auf die Patenterteilung: **25.12.2019**
(21) Anmeldenummer: 02002679.5
(22) Anmeldetag: 06.02.2002
(51) Int. Cl.: A61G 5/10, B60C 3/04, B60C 13/00, B60C 11/03, B60C 3/06, B60C 19/00, A61G 5/02

(54) **Rollstuhlreifen**
Wheelchair tyre
Bandage pneumatique pour fauteuil roulant

(30) Priorität: 06.03.2001 DE 20104394 U
(43) Veröffentlichungstag der Anmeldung: 11.09.2002
(73) Patentinhaber: Ralf Bohle GmbH, 51580 Reichshof (DE)
(72) Erfinder: Jahn, Holger, 51702 Bergneustadt (DE)
(74) Vertreter: Patentanwälte Ruff, Wilhelm, Beier, Dauster & Partner mbB

(56) Entgegenhaltungen:
- DE-A- 3 618 347
- DE-A- 3 622 076
- DE-A1- 19 852 565
- US-A- 4 493 355
- US-A- 6 142 201

## Beschreibung

Die Erfindung betrifft einen Rollstuhlreifen mit einer zwischen zwei Felgenwülsten zur Befestigung an einer Felge torusförmigen Karkasse und mit einem auf deren Außenseite aufgebrachten Laufprofil und einer erhabenen Beschriftung.

Rollstuhlreifen weisen bisher, wie aus der deutschen Offenlegungsschrift DE 36 22 076 A1 gemäß dem Oberbegriff des Anspruchs 1 bekannt ist, einen Aufbau auf, bei dem auf eine Karkasse eine Laufprofil aufvulkanisiert wird. Diese Laufprofil erstreckt sich in einem Winkel von annähernd 180° über die Karkasse und ist zwischen je einem erhabenen Begrenzungsstreifen an den Seitenwänden und einem erhabenen, zentralen Laufstreifen stollenartig ausgebildet.

Aus der deutschen Offenlegungsschrift DE 198 52 565 A1 ist ein Antreibring oder Greifreifen für einen Rollstuhl bekannt, der neben einer mit einem Rollstuhlreifen versehenen Felge angeordnet wird und zum Antreiben, Steuern und Bremsen eines Rollstuhls vorgesehen ist. Der Antreibring weist einen kreisförmigen Querschnitt auf, wobei in eine außenliegende Oberseite des Antreibrings ein kautschukartiger Greifring eingelegt ist. Der radial außen liegende Abschnitt des Antreibrings mit dem Greifreifen aus Kautschuk kann dadurch zum Antreiben des Rollstuhls verwendet werden, da durch den Kautschukgreifring ein hoher Reibungskoeffizient gegeben ist. Der übrige Umfang des Antreibrings ist aus Metall mit einer glatten Oberfläche ausgebildet, um den Rollstuhl bremsen zu können, ohne dabei der Hand des Benutzers Verbrennungen oder Verletzungen zuzufügen.

Aus der US-Patentschrift US 4,4963,355 ist ein Rollstuhlreifen mit Seitenwänden und einer Lauffläche bekannt, die mit einem Profil versehen ist. Der Reifen wird in einem Extrusionsverfahren hergestellt und es handelt sich nicht um einen Luftreifen, viel mehr ist die Materialelastizität für das Federungsverhalten des Reifens verantwortlich. Die Seitenwände sind ohne erhabene Bereiche dargestellt, in denen ein Profil oder Beschriftungen vorgesehen sind. Dieser erhebungsfreie Bereich der Seitenwände erstreckt sich ausgehend von einem Bereich der Seitenwände, in dem die Seitenwände mit einer Felge in Eingriff stehen, bis zu einem Punkt an den Seitenwänden, an dem die Seitenwände von einer Ebene geschnitten werden, die den Mittelpunkt eines Reifentorus scheidet und ist zu einer Mittelebene des Reifens in einem Winkel von maximal 45° angeordnet ist.

Weiterhin werden für Rollstühle Reifen verwendet, die in der gleichen Weise ausgebildet sind, wie Fahrradreifen. Das symmetrisch zur Mittelebene des Reifens aufgebrachte Laufprofil ragt dabei in den Bereich der Seitenwand herein. Üblicherweise ist auf der Seitenwand auch noch eine ebenfalls mit ausvulkanisierte erhabene Beschriftung vorhanden. Solche in der Art von Fahrradreifen ausgebildeten Reifen haben sich im Reha-Bereich bei der Verwendung für Rollstühle insofern als nachteilig erwiesen, als für handgetriebene Rollstühle die Hände der im Rollstuhl sitzenden Person mit dem nach oben überstehenden Laufprofil und gegebenenfalls auch mit den vorstehenden Beschriftungsteilen in Berührung kommen. Dies auch dann, wenn, wie das in der Regel der Fall ist, der Rollstuhl nicht durch unmittelbares Angreifen am Reifen selbst, sondern durch Angreifen an einem dem Rad außen in relativ geringem Abstand vorgelagerten Antreibring bewegt wird. Solche Berührungen können, wenn sie immer wieder zwangsläufig erfolgen, zu Verletzungen der Hand der Bedienungsperson führen.

Es ist die Aufgabe der Erfindung hier Abhilfe zu schaffen und einen Reifen für Rollstühle und für den Reha-Bereich bereit zu stellen, der das Verletzungsrisiko im Fahrbetrieb gegenüber herkömmlichen Rollstuhlreifen minimiert.

Zur Lösung dieser Aufgabe wird ein Rollstuhlreifen mit den Merkmalen von Anspruch 1 vorgeschlagen. Vorteilhafte Weiterbildungen der Erfindung sind in den Unteransprüchen angegeben. Bei einem Rollstuhlreifen der eingangs genannten Art sind die Profilerhebungen des Laufprofils zur glatten Außenwand der Karkasse hin durch eine zweite Grenzebene begrenzt, die parallel zur Mittelebene und durch die Schnittstelle der ersten Grenzebene mit dem Reifen verläuft, wobei die Karkasse mindestens an einer Reifenaußenwand von dem an der Felgenkante anliegenden Bereich ausgehend glatt und profil- und beschriftungsfrei mindestens bis zu einer durch die Mitte des Reifentorus verlaufende Ebene ausgebildet ist, deren Schnittstelle mit dem Reifenmantel maximal um einen Winkel (β) von 45° versetzt zu der Schnittstelle der ReifenMittelebene mit dem Reifen verläuft.

Unter "glatt" soll dabei verstanden werden, dass die Reifenaußenwand keine Dynamorillen, keine Formenteilnaht und auch keine Noppen aufweist, die durch die Anordnung von Entlüftungsöffnungen bei der Reifenherstellung entstehen.

Durch diese Ausgestaltung kann zumindest die später die Außenseite des Rades des Rollstuhls bildende Seite des Reifens so gestaltet werden, dass bei Handantrieb die Hände und insbesondere der Handballen, der auf der Innenseite des Antriebsringes angelegt werden soll, nicht am Reifen wundgescheuert werden kann. Die Erfindung ergibt somit einen insbesondere für den Reha-Bereich geeigneten Reifen, der von üblichen Fahrradreifen abweicht und speziell auf den Verwendungszweck für Rollstühle ausgelegt ist.

In Weiterbildung der Erfindung kann die glatte und profilfreie Außenseite des Reifens dadurch gebildet werden, dass das Laufprofil asymmetrisch zur Reifenmittelebene angeordnet ist, und nur bei der späteren Montage des Reifens auf der Innenseite des Rollstuhls, also zur Bedienungsperson hin, das eigentliche mit der Bodenfläche in Berührung kommende Reifenprofil aufweist, das nach der Außenseite hin immer geringere Tiefe erhält und dann in die glatte Außenseite übergeht.

Es ist aber auch möglich, den Rollstuhlreifen dadurch zu verwirklichen, dass ein an sich symmetrisch ausgebildetes Laufprofil seitlich versetzt zur Mittelebene so angeordnet wird, dass es auf der nach der Reifenmontage der Bedienungsperson zugewandten Seite des Reifens verläuft. Eine solche Ausgestaltung empfiehlt sich vor allem auch dann, wenn die Rollstuhlräder mit einem gewissen Sturz zur Vertikalebene am Rollstuhl so angeordnet werden, dass der Abstand der beiden Rollstuhlräder an ihren auf dem Boden aufstehenden Flächen größer ist als an den dem Rollstuhlfahrer zugewandten Oberflächen. Wird in Weiterbildung der Erfindung der seitliche Versatz des Laufprofils entsprechend dem Sturz der Radanordnung gewählt, so läuft das Laufprofil am Boden mit dem gewünschten vollen Eingriff ab, während es oben im Bereich der im Rollstuhl sitzenden Person zu der Innenseite des Rollstuhls und damit zu der im Rollstuhl sitzenden Person versetzt ist. Auf der Seite also, an der der Angriff der Hände der Bedienungsperson zur Fortbewegung des Rollstuhles erfolgt, also an den Außenseite der beiden Rollstuhlreifen, liegt daher kein Profil vor und es wird ein Aufscheuern der Hände der Bedienungsperson wirksam verhindert.

Bei einer vorteilhaften Weiterbildung der Erfindung kann schließlich auch vorgesehen werden, dass die Außenseite des Reifens mit einer besonders reibungsarmen Beschichtung versehen wird, die aufgrund ihrer Gleitfähigkeit handschonend wirkt und gleichzeitig aber auch eine Verschmutzung der Außenseite weitgehend verhindern kann.

Natürlich wäre es auch möglich, einen Rollstuhlreifen nach der Erfindung auch nur mit einem schmalen in der Mittelebene des Reifens verlaufenden Profil zu versehen, so dass beide Außenseiten des Reifens im Sinne der Erfindung glatt und profilfrei ausgebildet werden können. Eine solche Ausführungsform, bei der nur noch wenig Laufprofil dem Bodeneingriff zur Verfügung steht, ist aber als ein sogenannter "Indoor-Reifen" durchaus zweckmäßig. Auch mit einem solchen Reifen, bei dem keine bestimmte Montageanordnung einzuhalten ist, können Verletzungen durch Aufscheuern der Hand der Bedienungsperson vermieden werden.

Die Erfindung ist anhand von Ausführungsbeispielen in der Zeichnung dargestellt und wird im folgenden erläutert. Es zeigen:
- Fig. 1: die schematische Darstellung einer Frontansicht eines Rollstuhles, der mit Reifen nach der Erfindung ausgestattet ist,
- Fig. 2: die vergrößerte Darstellung des Details III in Fig. 1 in einer ersten Ausführungsform und
- Fig. 3: die vergrößerte Darstellung des Details III in Fig. 1 in einer weiteren Ausführungsform.

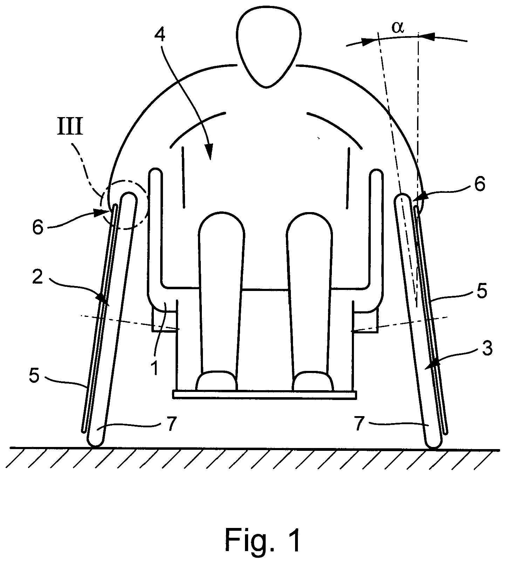

Die Fig. 1 lässt schematisch erkennen, dass die beiden größeren Räder 2 und 3 eines Rollstuhles 1 - dessen kleinere Räder nicht gezeigt sind - jeweils unter einem Sturz mit dem Winkel α zu einer Vertikalebene am Rollstuhl 1 angeordnet sind. Die im Rollstuhl sitzende Person 4 übergreift in bekannter Weise die Oberseite der Räder 2 und 3 und bewirkt den Antrieb des Rollstuhls durch Anpacken an jeweils einem den Rädern 2 bzw. 3 außen vorgelagerten Antriebsring 5. Es wird deutlich, dass an den Stellen 6, die jeweils im Bereich der Oberseite der Räder und des Antriebsrings 5 liegen, eine Berührung der Hände der im Rollstuhl sitzenden Person 4 mit der Außenseite der jeweils an den Rädern 2 und 3 angeordneten Reifen 7 nicht vermieden werden kann. Dies kann zu einem Aufscheuern der Hände, insbesondere des Daumens oder des Handballens an der Außenseite des jeweiligen Reifens 7 führen. Dieser Nachteil tritt insbesondere dann ein, wenn der Reifen, der üblicherweise wie ein Fahrradreifen ausgebildet ist, ein die Karkasse 8 des Reifens 7 außen weit übergreifendes Stollenprofil und auf der nach außen gewandten Seite auch noch eine einvulkanisierte erhabene Schrift aufweist. Auch die üblicherweise vorhandenen kleinen Noppen, die auf die Entlüftungsöffnungen der Herstellungsform zurückgehen, tragen zu Verletzungen durch Aufscheuern bei.

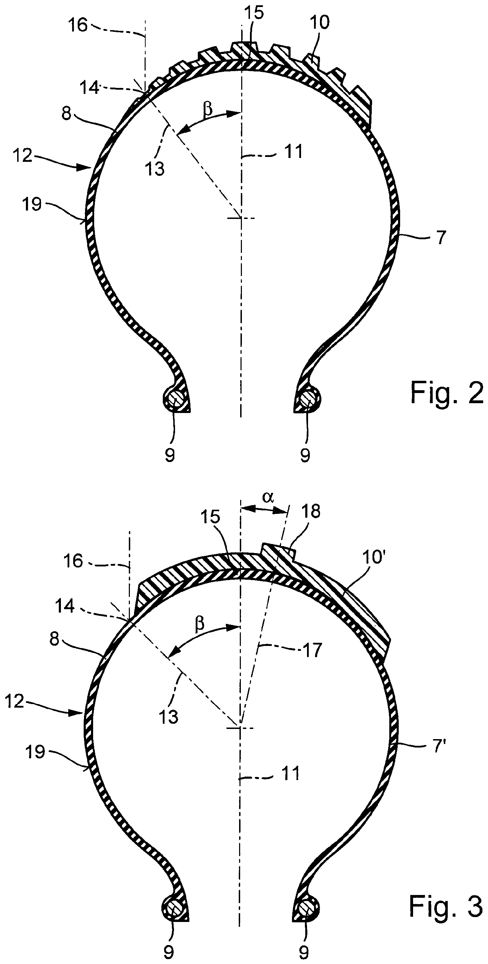

Die Fig. 2 zeigt eine vergrößerte Darstellung des in der Fig. 1 links angeordneten Reifens in einer ersten Ausführungsform. Der Reifen 7 besitzt in an sich bekannter Weise eine torusförmig verlaufende Karkasse 8, die unten mit zwei Felgenwülsten 9 zur Befestigung an einer nicht gezeigten Felge versehen ist. Die Karkasse 8 ist bei diesem Reifen mit einem Laufprofil 10 versehen, das asymmetrisch zu der Mittelebene 11 des Reifens ausgebildet ist und auf der später die Außenseite 12 des Reifens bildenden Seite vollkommen glatt, ohne jede hervorstehenden Teile, also ohne Beschriftung und jedenfalls bis zu der schematisch angedeuteten ersten Grenzebene 13 ohne nennenswertes nach außen vorstehendes Profil ist. Die Außenseite 12 weist auch keine "Entlüftungsnoppen" auf. Die Ebene 13 verläuft durch die Mitte des Reifentorus und weist eine Schnittstelle 14 mit dem Reifen auf, die gegenüber der Schnittstelle 15 der Mittelebene 11 mit dem Reifen um den Winkel β nach außen versetzt ist. Die Profilierung ist in diesem Bereich entweder gar nicht vorhanden oder nur mit geringer Tiefe ausgestaltet. Das Profil wird zur Mittelebene 11 hin immer tiefer und bleibt in dieser Profilstärke auf der späteren Innenseite des Reifens 7 gleich.

Es leuchtet ohne weiteres ein, dass ein solcher Rollstuhlreifen, insbesondere wenn er unter einem Sturz so angestellt ist, dass die Mittelebene 11 schräg zu einer Vertikalen steht, auf seiner Außenseite 12, auf der später die Hände der im Rollstuhl sitzenden Person 4 angreifen müssen, äußerst bedienungsfreundlich ausgebildet ist. Ein Aufscheuern der Hände wird nahezu vollständig vermieden, ohne dass jedoch die Laufeigenschaften des Reifens und des Rollstuhls nachteilig beeinflusst werden. Die der Außenseite 12 zugewandten Reifenaußenwand kann dabei, um die Bedienung noch weiter zu verbessern, mit einer reibungsarmen, möglicherweise auch gleitfähigen Beschichtung 19 versehen sein.

Die Fig. 2 lässt auch erkennen, dass größere Profilerhebungen, wie etwa Noppen oder dergleichen des Laufprofils 10 nach außen nicht über eine zweite Grenzebene 16 vorstehen, die parallel zur Mittelebene 11 des Reifens 7 verläuft und durch die Schnittstelle 14 der ersten Grenzebene 13 mit dem Reifen 7 geht. Diese Ausgestaltung sichert zu, dass in den Greifbereich keine die Handhabung behindernden Vorsprünge oder Profilteile hereinragen. Die zweite Grenzebene 16 stellt dabei natürlich nur die äußerste Grenze dar. Ihre Lage kann, je nach gewünschter Profilart oder Ausbildung, auch mehr zur Mittelebene 11 hin verschoben sein. Das gilt natürlich auch für die erste Grenzebene 13, die eine Radialebene ist. Der Winkel β zwischen dieser Ebene und der Mittelebene 11 kann natürlich auch kleiner als 45° sein. In keinem Fall darf dieser Winkel aber größer als 45° werden.

Die Fig. 3 zeigt eine Variante des Reifens nach Fig. 2. Gleiche Teile sind dabei in Fig. 3 mit den gleichen Bezugszeichen wie in Fig. 2 versehen.

Unterschiedlich zum Reifen nach Fig. 2 ist hier, dass das Laufprofil 10' des Reifens 7' ein symmetrisch ausgebildetes Laufprofil ist, das eine Symmetrieebene 17 besitzt. Symmetrisches Laufprofil soll in diesem Zusammenhang heißen, dass die nach außen über die Karkasse 8 vorstehenden Profilierungen in ihrer Höhe symmetrisch zu der Ebene 17 ausgebildet sind. Dabei kann die Art der Profilierung entweder ebenfalls symmetrisch zur Ebene 17 sein oder auch bezüglich der Anordnung von Vertiefungen oder Rillen unterschiedlich. Im vorliegenden Fall ist lediglich maßgebend, dass es sich bei dem Laufprofil 10' auch um ein vollkommen symmetrisch zur Ebene 17 hin ausgebildetes Laufprofil handein kann, das aber im Sinne der vorliegenden Erfindung mit seiner Mittelebene 17 um den Winkel α gegenüber der Mittelebene 11 des Reifens versetzt angeordnet ist, und zwar so, dass die Karkasse 8 wiederum später auf der am Rollstuhl nach außen gerichteten Seite 12 von dem an der Felgenkante 9 anliegenden Bereich ausgehend mindestens bis zu der ersten Grenzebene 13 vollkommen profil- und beschriftungsfrei ausgebildet ist. Auch in diesem Fall stehen keinerlei Profilteile des Laufprofils 10' oder Entlüftungsnoppen nach dieser glatt ausgebildeten Außenseite der Karkasse 8 über die zweite Grenzebene 16 hinaus.

Der Versatzwinkel α kann dabei, wie auch anhand von Fig. 1 angedeutet ist, dem Radsturz von etwa 9° bis 16° angepasst sein. Ein solcher Radsturz ist insbesondere bei Sport-Rollstühlen vorgesehen. In einem solchen Fall würde dann der Reifen 7' mit dem Mittelprofilstreifen 18 seines Laufprofils 10' auf der Bodenfläche zur Anlage kommen, auf der der Rollstuhl 1 bewegt wird.

Es ist natürlich auch denkbar, beispielsweise den Reifen 7 nach Fig. 2 als sogenannten "Indoor"-Reifen mit einem Laufprofil zu versehen, das symmetrisch zur Mittelebene 11 aufgebaut ist, aber der Ausgestaltung des Profils links von der in Fig. 2 gezeigten Mittelebene 11 entspricht. Es entsteht dann ein Reifen, der eigentlich nur noch im Bereich seiner Mittelebene 11 ein nennenswert über die Karkasse nach außen vorstehendes Profil aufweist, das aber nach beiden Seiten von der Mittelebene 11 aus abflacht. Ein solcher Reifen, der vorwiegend für Rollstühle eingesetzt wird, die nur innerhalb von Räumen verwendet werden, besitzt aber ausreichendes Laufprofil für diesen Zweck und bietet den Vorteil, dass er ungeachtet seiner Montage auf der Felge auch dann, wenn die Räder ohne Sturz angeordnet sind, ergonomisch und bedienungsfreundlich für die im Rollstuhl sitzende Person ist, die auch dann am Antriebsring in einfacher Weise anpacken kann, ohne befürchten zu müssen, dass irgendwelche Teile der Hand von der Reifenaußenseite aufgescheuert werden.

Durch die Erfindung ist somit ein speziell für Rollstühle und für den Reha-Bereich ausgebildeter Reifen mit entscheidenden Vorteilen entwickelt worden.

## Patentansprüche

1. Rollstuhlreifen mit einer torusförmigen und zwischen zwei Felgenwülsten zur Befestigung an einer Felge offenen Karkasse (8) mit einem auf deren Außenseite aufgebrachten Laufprofil (10, 10') und einer erhabenen Beschriftung, **dadurch gekennzeichnet, dass** die Karkasse (8) im fahrfertigen und auf einer Felge befestigten Zustand des Rollstuhlreifens mindestens an einer Reifenaußenwand von dem mit der Felgenkante anliegenden Bereich ausgehend glatt und profil- und beschriftungsfrei mindestens bis zu einer durch die Mitte des Reifentorus verlaufenden ersten Grenzebene (13) ausgebildet ist, deren Schnittstelle (14) am Reifen maximal um einen Winkel (β) von 45° versetzt zu der Schnittstelle (15) der Mittelebene (11) mit dem Reifen (7) verläuft und dass die Profilerhebungen des Laufprofils (10, 10') zur glatten Außenwand der Karkasse (8) hin durch eine zweite Grenzebene (16) begrenzt sind, die parallel zur Mittelebene (11) und durch die Schnittstelle (14) der ersten Grenzebene (13) mit dem Reifen (7) verläuft.

2. Rollstuhlreifen nach Anspruch 1, **dadurch gekennzeichnet, dass** das Laufprofil (10) asymmetrisch zur Mittelebene (11) ausgebildet ist.

3. Rollstuhlreifen nach Anspruch 1, **dadurch gekennzeichnet, dass** das Laufprofil (10)') seitlich versetzt zur Mittelebene (11) angeordnet ist.

4. Rollstuhlreifen nach Anspruch 3, **dadurch gekennzeichnet, dass** der Winkel (α) des Versatzes der Mittelebene (17) des Profils (10') dem Sturz der Radanordnung entspricht.

5. Rollstuhlreifen nach Anspruch 1, **dadurch gekennzeichnet, dass** die Reifenaußenwand mit einer reibungsarmen, gegebenenfalls auch gleitfähigen Beschichtung (19) versehen ist.

## Claims

1. Wheelchair tyre having, a torus-shaped carcass (8), which is open between two rim beads for fastening to a rim, the carcass (8) having a running profile (10, 10') applied to its exterior and a raised lettering, **characterized in that** the carcass (8), in a condition of the wheelchair tyre ready-to-run and fastened to a rim, at least on an exterior tyre wall, starting from a region adjoining with a rim edge, is smooth and free of profiles and lettering at least up to a first boundary plane (13) extending through a center of the tyre torus, an intersection point (14) of the first boundary plane (13) on the tyre extending maximally offset by an angle (β) of 45° with respect to an intersection point (15) of a center plane (11) with the tyre (7), and **in that** the profile elevations of the running profile (10, 10') are bounded toward the smooth exterior wall of the carcass (8) by a second boundary plane (16) which extends parallel to the center plane (11) and through the intersection point (14) of the first boundary plane (13) with the tyre (7).

2. Wheelchair tyre according to claim 1, **characterized in that** the running profile (10) is constructed asymmetrically with respect to the center plane (11).

3. Wheelchair tyre according to claim 1, **characterized in that** the running profile (10') is arranged laterally offset with respect to the center plane (11).

4. Wheelchair tyre according to claim 3, **characterized in that** the angle (α) of the offset of the center plane (17) of the profile (10') corresponds to the camber of the wheel arrangement.

5. Wheelchair tyre according to claim 1, **characterized in that** the exterior tyre wall is provided with a low-friction, optionally also slidable coating (19).

## Revendications

1. Bandage pneumatique pour fauteuil roulant, comportant une carcasse (8) de forme torique étant ouverte entre deux talons destinés à la fixation sur une jante et comportant une bande de roulement (10, 10') appliquée sur sa face externe, ainsi qu'une inscription en relief, **caractérisé en ce que**, le bandage pneumatique pour fauteuil roulant étant en état de rouler et fixé sur une jante, la carcasse (8) est lisse et dépourvue de sculptures et d'inscription au moins sur une paroi externe dudit bandage pneumatique partant de la région adjacente au bord de jante jusqu'au moins un premier plan démarcatif (13) passant par le milieu du tore dudit bandage pneumatique et dont l'intersection (14) avec ledit bandage pneumatique s'étend de manière décalée suivant un angle (*β*) d'au maximum 45° avec l'intersection (15) du plan médian (11) et du bandage pneumatique (7), les sculptures de la bande de roulement (10, 10') étant bordées vers la paroi externe lisse de la carcasse (8) par un deuxième plan démarcatif (16) parallèle au plan médian (11) et passant par l'intersection (14) du premier plan démarcatif (13) et du bandage pneumatique (7).

2. Bandage pneumatique pour fauteuil roulant selon la revendication 1, **caractérisé en ce que** la forme de la bande de roulement (10) est asymétrique par rapport au plan médian (11).

3. Bandage pneumatique pour fauteuil roulant selon la revendication 1, **caractérisé en ce que** la bande de roulement (10') est décalée latéralement par rapport au plan médian (11).

4. Bandage pneumatique pour fauteuil roulant selon la revendication 3, **caractérisé en ce que** l'angle (*α*) de décalage du plan médian (17) de la bande de roulement (10') correspond au carrossage de la roue.

5. Bandage pneumatique pour fauteuil roulant selon la revendication 1, **caractérisé en ce que** la face externe du bandage pneumatique est dotée d'un revêtement (19) à faible frottement qui peut être glissant, le cas échéant.
